## Europäisches Patentamt
## European Patent Office
## Office européen des brevets

(19)

(11) Numéro de publication: **0 106 754**
**B1**

(12)

# FASCICULE DE BREVET EUROPEEN

(45) Date de publication du fascicule du brevet:
28.12.88

(51) Int. Cl.⁴: **C 08 J 3/24**, B 29 C 71/02, C 08 G 59/18

(21) Numéro de dépôt: 83401937.4

(22) Date de dépôt: 04.10.83

(54) Procédé de polymérisation de résines thermodurcissables (1111111).

(30) Priorité: 08.10.82 FR 8217180

(43) Date de publication de la demande:
25.04.84 Bulletin 84/17

(45) Mention de la délivrance du brevet:
28.12.88 Bulletin 88/52

(84) Etats contractants désignés:
CH DE FR IT LI NL

(56) Documents cités:
DE-A- 2 025 042
DE-A- 2 448 861
FR-A- 661 190
FR-A- 2 014 790
FR-A- 2 148 416
NL-A- 7 400 321
US-A- 3 565 665
US-A- 3 676 172

Chemical Abstracts 105, 154749z (1986)
Chemical Abstracts 95, 117234g (1981)

(73) Titulaire: AUSIMONT S.p.A., 31, Foro Buonaparte, I-20121 Milano (IT)

(72) Inventeur: Lambert, François, 85, rue de la Convention, F-75015 Paris (FR)
Inventeur: Val, Christian, 81, rue de Paris, F-78470 St. Remy Les Chevreuse (FR)

(74) Mandataire: Weinhold, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)

## Description

La présente invention concerne la réticulation des résines thermoréticulables; c'est-à-dire des résines dont la réticulation est due à la réaction chimique d'une résine polymère linéaire avec un agent chimique durcisseur.

Cette réaction chimique créant des molécules géantes tridimensionnelles est déclenchée et accélérée par un apport de chaleur.

Cet apport de chaleur est jusqu'à présent effectué par conduction, par exemple sur une plaque chauffante, par rayonnement par exemple dans un tunnel à infrarouge, ou par convection par exemple dans une veine d'air chaud. Ces moyens de chauffage peuvent également être utilisés en combinaison; c'est ainsi qu'un procédé usuel pour réticuler une pièce en résine thermoréticulable est de la placer dans un four, auquel cas la pièce est chauffée à la fois par conduction, par rayonnement et par convection.

La présente invention a pour objet un procédé de réticulation d'une pièce en résine thermoréticulable qui, entre autres avantages, permet de manière surprenante, d'obtenir une meilleure réticulation pour une température de réticulation donnée.

Selon le procédé de l'invention, on place la pièce à réticuler en résine époxy thermodurcissable dans la phase vapeur d'un liquide en ébullition, par exemple à la pression atmosphérique, cette phase vapeur étant au contact immédiat de la phase liquide en ébullition, la pièce se trouvant initialement à une température inférieure à la température d'ébullition du liquide et le liquide, non-solvant de la résine, ayant une température d'ébullition supérieure à 100 °C. Il se produit alors sur la pièce une condensation de liquide qui porte très rapidement la pièce à la température d'ébullition du liquide.

Comme la température d'ébullition est constante pour une pression donnée, la température à laquelle la pièce est portée ne peut dépasser la température d'ébullition et toute surchauffe de la pièce est impossible. La chaleur de vaporisation d'un liquide étant très grande par rapport à la chaleur spécifique du gaz correspondant, l'échauffement de la pièce est très rapide, en tout cas beaucoup plus rapide que si la pièce était simplement placée dans un volume contenant un gaz chaud. Si le liquide en ébullition a une grande inertie chimique, il enveloppe la pièce au cours de sa réticulation et la protège de la vapeur d'eau, de l'oxygène et des composants atmosphériques. La surface de la pièce est réticulée presque instantanément et, grâce à la peau ainsi formée, la perte de poids est minimale. Enfin, comme il a été indiqué ci-dessus, le degré de réticulation est particulièrement élevé, supérieur à celui obtenu par les moyens de chauffage usuels.

De manière préférée, les pièces en résines époxy sont placées sur un substrat organique, auquel cas il est possible, en choisissant un liquide convenable, d'effectuer la réticulation de la pièce à une température nettement supérieure à 100 °C, par exemple à 150 °C, la réticulation se faisant alors extrêmement rapidement.

Le procédé selon l'invention peut être mis en œuvre par lot de pièces à réticuler ou en continu.

Il est connu d'utiliser de la vapeur d'eau pour réticuler une matière plastique. Mais dans ce cas, les calories sont fournies à la matière plastique par la vapeur qui peut être surchauffée et dont la température est variable. Ce mode de chauffage est totalement différent du procédé selon l'invention dans lequel la vapeur est en présence de sa phase liquide en ébullition, donc à la température d'ébullition, et dans lequel les calories sont fournies par la condensation de la vapeur d'eau sur la pièce à réticuler.

Le brevet US-A-3 565 665 décrit un procédé pour revêtir un article d'un film polymère continu, qui comprend les étapes suivantes:

a) on dépose et on fait adhérer une couche de matière polymère particulaire (éventuellement un polyépoxyde) sur la surface extérieure de l'article,

b) on maintient l'article ainsi revêtu à une température inférieure au point d'ébullition d'une composition qui, à sa température d'ébullition et au voisinage de cette température, est un solvant du polymère et

c) on place l'article revêtu dans une atmosphère contenant ladite composition à l'état de vapeur, de sorte que les vapeurs se condensent à la surface de l'article et provoquent la fusion de la matière polymère pour former un film continu sur ladite surface.

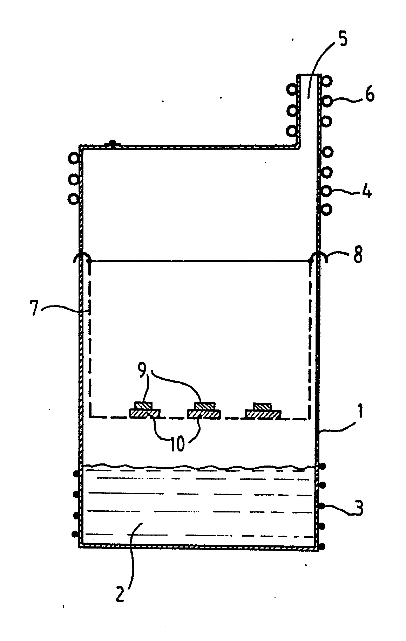

On a décrit ci-après, à titre d'exemple non limitatif, un mode de mise en œuvre du procédé selon l'invention avec référence à la figure unique du dessin annexé qui est un schéma d'un dispositif réalisé à cet effet.

Au dessin, on voit un récipient 1 dont la partie inférieure contient un liquide 2 et est entourée d'un élément chauffant 3. Sa partie supérieure est entourée par un tube 4 à travers lequel on peut faire circuler un courant d'eau froide et qui forme condenseur; elle communique avec l'extérieur par un conduit 5 également entouré par un tube de refroidissement 6.

A l'intérieur du récipient 1 est disposé un panier en acier inoxydable 7 qui est suspendu à la paroi du récipient par des crochets 8 et dans lequel on place les pièces à réticuler.

Lorsque le liquide 2 est porté à ébullition, la température à l'intérieur du récipient 1 est égale à celle du point d'ébullition du liquide 2. Si on place une pièce froide dans le panier 7, cette pièce est presque instantanément portée à cette température et réticulée rapidement.

Les pièces à réticuler peuvent par exemple, être constituées par des éléments 9 en une résine epoxy chargée d'argent, telle que celle connue dans le commerce sous le nom d'«EPOTEK®H 20 E» (résine de bisphénol A modifiée chargée à argent) qui sont placées sur un substrat 10 qui peut, par exemple, être en alumine, en verre ou en résine polyester.

Les résines epoxy devant être réticulées à une température supérieure à 100 °C, par exemple 150 °C, le liquide 2 doit avoir un point d'ébullition supérieur à 100 °C. Ce liquide peut, à cet effet, être constitué par un Fluorinert® (fluorure de carbone saturé de la société 3M) tel que celui commercialisé sous le nom de FC 75 ou de FC 43 dont les points d'ébullition sont respectivement de 102 °C et de 174°C; en les mélangeant en proportion convenable, il est possible d'obtenir un liquide ayant tout point d'ébullition désiré entre 102 °C et 174 °C.

La résistivité d'une résine époxy chargée d'argent est fonction du taux de réticulation de la résine, elle est d'autant plus faible que la réticulation est meilleure. On peut donc déterminer le taux de réticulation d'une pièce en mesurant sa résistivité.

Des essais comparatifs ont été effectués sur des éléments 9 dont certains ont été réticulés dans un four alors que les autres étaient réticulés en phase vapeur selon l'invention, le taux de réticulation étant déterminé à chaque fois par la mesure de la résistivité donnée en microohm/cm. Les résultats sont donnés dans le tableau suivant:

Tableau 1

| Température | Mode de Chauffage | Durée en minutes | Nature du Substrat 10 | Résistivité |
|---|---|---|---|---|
| 102° | Four | 25 | Alumine | 542 |
| 102° | Phase vapeur | d° | d° | 541 |
| 102° | Four | d° | Verre | 691 |
| 102° | Phase vapeur | d° | d° | 651 |
| 102° | Four | 25 | Polyester | 902 |
| 102° | Phase vapeur | d° | d° | 590 |
| 102° | Four | 30 | Alumine | 655 |
| 102° | Phase vapeur | d° | d° | 280 |
| 102° | Four | d° | Verre | 710 |
| 102° | Phase vapeur | d° | d° | 648 |
| 102° | Four | d° | Polyester | 1000 |
| 102° | Phase vapeur | d° | d° | 421 |
| 120° | Four | 15 | Alumine | 516 |
| 120° | Phase vapeur | d° | d° | 358 |
| 120° | Four | d° | Verre | 531 |
| 120° | Phase vapeur | d° | d° | 354 |
| 120° | Four | d° | Polyester | 750 |
| 120° | Phase vapeur | d° | d° | 429 |
| 150° | Four | 4 | d° | 808 |
| 150° | Phase vapeur | d° | d° | 413 |
| 150° | Four | 5 | Alumine | 769 |
| 150° | Phase vapeur | d° | d° | 309 |
| 150° | Four | d° | Verre | 560 |
| 150° | Phase vapeur | d° | d° | 505 |
| 150° | Four | d° | Polyester | 608 |
| 150° | Phase vapeur | d° | d° | 326 |
| 175° | Four | 0,5 | Alumine | non réticulé |
| 175° | Phase vapeur | d° | d° | 818 |
| 175° | Four | d° | Verre | non réticulé |
| 175° | Phase vapeur | d° | d° | 453 |
| 175° | Four | d° | Polyester | non réticulé |
| 175° | Phase vapeur | d° | d° | 845 |
| 175° | Four | 0,75 | Alumine | non réticulé |
| 175° | Phase vapeur | d° | d° | 285 |
| 175° | Four | d° | Verre | non réticulé |
| 175° | Phase vapeur | d° | d° | 603 |
| 175° | Four | d° | Polyester | 1034 |
| 175° | Phase vapeur | d° | d° | 244 |

Ce tableau montre que pour une même température le taux de réticulation est nettement plus élevé, à une température donnée, avec le procédé selon l'invention. Il est de plus possible de réticuler la résine dans des conditions qui, dans un four, n'entraînent pas la réticulation; on peut par exemple réticuler une pièce en trente secondes ce qui est impossible dans un four.

Les pertes de poids relatives de la résine 9 au cours de la réticulation ont également été déterminées et les résultats sont donnés dans le tableau suivant:

Tableau 2

| Tempéra-ture | Mode de Chauffage | Durée en minutes | Nature du Substrat 10 | $\dfrac{DW}{W} \times 10^3$ |
|---|---|---|---|---|
| 120° | Four | 15 | Verre | 86 |
| 120° | Phase vapeur | d° | d° | 55 |
| 120° | Four | d° | Polyester | 80 |
| 120° | Phase vapeur | d° | d° | 66 |
| 150° | Four | 5 | Alumine | 64 |
| 150° | Phase vapeur | d° | d° | 54 |
| 150° | Four | d° | Verre | 64 |
| 150° | Phase vapeur | d° | d° | 52 |
| 150° | Four | d° | Polyester | 68 |
| 150° | Phase vapeur | d° | d° | 49 |
| 175° | Four | 0,75 | d° | 65 |
| 175° | Phase vapeur | d° | d° | 53 |

Ce tableau montre que les pertes en poids de la résine sont nettement plus faibles avec le procédé selon l'invention.

Des essais ont par ailleurs montré que la température de transition vitreuse était augmentée de manière surprenante. Alors que dans le cas d'une réticulation dans un four, cette température de transition ne pouvait jamais dépasser 100 °C, cette température atteint une valeur de 130 °C lors d'un chauffage en phase vapeur de cinq minutes à 150 °C ou de quarante-cinq secondes à une température de 175 °C. Comme la température de transition vitreuse est le meilleur moyen de contrôle de la réticulation, ces essais montrent que le chauffage en phase vapeur est un moyen pour cuire les résines epoxy qui, de manière inattendue, donne des résultats extraordinairement bons.

**Revendication**

Procédé de réticulation d'une pièce en résine époxy thermoréticulable, dans lequel on place la pièce à réticuler dans la phase vapeur d'un liquide en ébullition, par exemple à la pression atmosphérique, cette phase vapeur étant au contact immédiat de la phase liquide en ébullition, la pièce se trouvant initialement à une température inférieure à la température d'ébullition du liquide et le liquide, non-solvant de la résine, ayant une température d'ébullition supérieure à 100 °C.

**Claim**

Process for crosslinking a piece of epoxy resin crosslinkable by heat, in which the piece to be crosslinked is placed into the vapor phase of a boiling liquid, e.g. at atmospheric pressure, said vapor phase being in immediate contact to the liquid boiling phase, said piece being initially at a temperature below the boiling temperature of the liquid, and the liquid, a non-solvent for the resin, having a boiling temperature above 100 °C.

**Patentanspruch**

Verfahren zur Vernetzung eines Stückes eines durch Wärme vernetzbaren Epoxyharzes, bei welchem man das zu vernetzende Stück in die Dampfphase einer siedenden Flüssigkeit, z. B. bei atmosphärischem Druck, gibt, wobei diese Dampfphase sich in unmittelbarem Kontakt der flüssigen, siedenden Phase befindet, das Stück sich anfänglich auf einer Temperatur unterhalb der Siedetemperatur der Flüssigkeit befindet und die Flüssigkeit, ein Nicht-Lösungsmittel des Harzes, eine Siedetemperatur oberhalb 100 °C hat.